# EUROPÄISCHE PATENTANMELDUNG

(11) **EP 3 159 665 A1**
(43) Veröffentlichungstag der Anmeldung: **26.04.2017**
(21) Anmeldenummer: 15190402.6
(22) Anmeldetag: 19.10.2015
(51) Int. Cl.: G01J 5/08, G01J 5/00, F01D 19/02, F01D 21/12

(54) **TEMPERATURMESSEINRICHTUNG UND VERFAHREN ZUM BETRIEB EINER STRÖMUNGSMASCHINE**

(71) Anmelder: Siemens Aktiengesellschaft, 80333 München (DE)
(72) Erfinder: Tomaz, Borislav, 90411 Nürnberg (DE); Willsch, Michael, 07745 Jena (DE)

(57) **Zusammenfassung**

Die Erfindung betrifft eine Temperaturmesseinrichtung (100) für eine Strömungsmaschine (200), umfassend eine Messsonde (1) zur berührungslosen Temperaturmessung einer rotierbaren Komponente (2), einen von der Messsonde (1) beabstandeten Strahlungsdetektor (3) zur Detektion einer von der Komponente (2) ausgehenden Wärmestrahlung (WS) und einen Strahlungsleiter (4), welcher angeordnet und ausgebildet ist, die Wärmestrahlung (WS) von der Messsonde (1) zum Strahlungsdetektor (3) zu leiten. Die Erfindung betrifft weiterhin eine Verwendung der Temperaturmesseinrichtung (100) zur Messung der Temperatur der rotierbaren Komponente (2) und ein Verfahren zum Betrieb einer Strömungsmaschine (200) umfassend das berührungslose Messen der Temperatur mindestens einer rotierbaren Komponente (2) der Strömungsmaschine (200) mit der Temperaturmesseinrichtung (100) und das Anfahren der Strömungsmaschine (200) gemäß einem durch die gemessene Temperatur bestimmten Temperaturgradienten.

## Beschreibung

Die vorliegende Erfindung betrifft eine Temperaturmesseinrichtung für eine Strömungsmaschine, beispielsweise eine Dampfturbine. Weiterhin betrifft die vorliegende Erfindung die Verwendung der Temperaturmesseinrichtung sowie ein Verfahren zum Betrieb der Strömungsmaschine.

Die gegenwärtige Situation in der elektrischen Energieversorgung erfordert seitens der Energieerzeuger zunehmend mehr Flexibilität bezüglich der Betriebsweise von Strömungsmaschinen. Insbesondere besteht für Kraftwerksbetreiber ein Bedarf, den Einsatz von Dampfturbinen zu flexibilisieren oder flexibler einzusetzen, d.h. diese beispielsweise nur für eine kurzfristige Einspeisung von Energie ans Stromnetz anzuschließen, oder auch die Dampfturbine beispielsweise nur kurzfristig wieder vom Netz zu nehmen. Dampfturbinen werden normalerweise auf eine bestimmte Anzahl von Starts, Betriebsstunden und/oder An- und Abfahrtvorgängen ausgelegt, wobei eine veränderte Betriebsweise - beispielsweise ein schnelleres Anfahren aufgrund der begrenzten Belastbarkeit, beispielsweise der thermischen Belastbarkeit, der Bauteile oder Materialien nicht mehr oder kaum noch möglich ist. Um die ordnungsgemäße Funktion der einzelnen Teile oder Komponenten von Strömungsmaschinen während des Betriebs sicherzustellen, benötigt man eine bessere Temperaturüberwachung dieser Komponenten.

Es ist daher die Aufgabe der vorliegenden Erfindung, Mittel anzugeben, welche die Temperaturüberwachung insbesondere von beweglichen oder rotierenden Teilen einer Strömungsmaschine, beispielsweise einer Dampfturbine, verbessern können. Insbesondere wird durch die angegebenen Mittel ein flexiblerer, effizienterer oder verbesserter Einsatz der Strömungsmaschine ermöglicht.

Diese Aufgabe wird durch den Gegenstand der unabhängigen Ansprüche gelöst. Vorteilhafte Ausgestaltungen sind Gegenstand der abhängigen Patentansprüche.

Ein Aspekt der vorliegenden Erfindung betrifft eine Temperaturmesseinrichtung für eine Strömungsmaschine, insbesondere eine Dampfturbine. Die Temperaturmesseinrichtung umfasst eine Messsonde zur berührungslosen Temperaturmessung einer beweglichen oder bewegbaren, insbesondere rotierbaren, Komponente.

Vorzugsweise ist die Komponente relativ zu der Temperaturmesseinrichtung und/oder, besonders bevorzugt relativ zur Messsonde, bewegbar, insbesondere rotierbar.

Vorzugsweise handelt es sich bei der Komponente um eine Komponente einer Strömungsmaschine, beispielsweise um eine Welle einer Dampf- oder Gasturbine.

Die Temperaturmesseinrichtung umfasst weiterhin einen von der Messsonde beabstandeten Strahlungsdetektor zur Detektion einer von der Komponente ausgehenden oder emittierten Wärmestrahlung. Der Strahlungsdetektor ist vorzugsweise ein Halbleiterdetektor, wie beispielsweise ein InGaAs-Strahlungsdetektor für den Wellenlängenbereich des nahen Infrarots (NIR).

Die Temperaturmesseinrichtung umfasst weiterhin einen Strahlungsleiter, beispielsweise einen Wellenleiter, welcher angeordnet und ausgebildet ist, die von der Komponente ausgehende oder emittierte Wärmestrahlung von der Messsonde zum Strahlungsdetektor zu leiten. Durch die Ausbildung des Strahlungsleiters und die Beabstandung des Strahlungsdetektor von der Messsonde (oder umgekehrt) kann die Messsonde mit Vorteil in schwer zugänglichen Bereichen und/oder weit entfernt vom Strahlungsdetektor angeordnet werden. Weiterhin kann die Messsonde zur Messung der Temperatur der Komponente unter Umgebungsbedingungen eingesetzt werden, unter welchen der Strahlungsdetektor nicht oder nur schwer einsetzbar wäre.

Die Temperaturmesseinrichtung ist oder umfasst vorzugsweise ein Pyrometer. Mit anderen Worten wird die Temperatur durch die Temperaturmesseinrichtung vorzugsweise pyrometrisch gemessen.

In einer Ausgestaltung ist die Temperaturmesseinrichtung zur Messung der Temperatur der Komponente während des Betriebs der Dampfturbine ausgebildet.

In einer Ausgestaltung ist die Komponente eine Welle, ein Wellenteil, ein Rotor, ein Turbinenläufer und/oder ein Achs- oder Lagerteil der Strömungsmaschine, insbesondere der Dampfturbine.

In einer Ausgestaltung sind die Messsonde und der Strahlungsleiter jeweils bis 600 °C temperaturbeständig ausgebildet. Diese Ausgestaltung ist insbesondere für den Einsatz der Temperaturmesseinrichtung für eine Dampfturbine zweckmäßig.

In einer Ausgestaltung sind die Messsonde und der Strahlungsleiter jeweils bis 200 bar druckbeständig ausgebildet. Diese Ausgestaltung ist insbesondere für den Einsatz der Temperaturmesseinrichtung für eine Dampfturbine zweckmäßig.

In einer Ausgestaltung weist der Strahlungsleiter mindestens einen lanzenartigen oder länglichen Abschnitt auf. Durch diese Ausgestaltung kann besonders zweckmäßig eine Beabstandung des Strahlungsdetektors von der Messsonde erreicht werden. Alternativ oder zusätzlich kann die Messsonde mit Vorteil in schwer zugängliche Bereiche eingebracht werden.

In einer Ausgestaltung ist die Temperaturmesseinrichtung derart ausgebildet, dass die Messsonde zur Temperaturmessung der Komponente innerhalb eines die Komponente umgebenden Gehäuses, beispielsweise ein Gehäuse der Strömungsmaschine, angeordnet und die Wärmestrahlung über den mindestens einen lanzenartigen Abschnitt aus dem Gehäuse herausgeführt werden kann. Insbesondere kann es erforderlich sein, die Messsonde zur Messung der Temperatur der Komponente besonders weit oder tief in das Gehäuse der Strömungsmaschine einzubringen, um die Temperatur der Komponente mit einer ausreichenden Genauigkeit zu messen. Vorzugsweise ist der Strahlungsdetektor außerhalb des genannten Gehäuses angeordnet.

In einer Ausgestaltung umfasst die Messsonde eine Optik, beispielsweise eine Linsen- und/oder Sammeloptik. Alternativ kann die Optik die Messsonde oder einen Teil der Messsonde bilden. Durch diese Ausgestaltung kann von der Komponente emittierte Wärmestrahlung zweckmäßig eingesammelt, fokussiert und/oder in den Strahlungsleiter eingekoppelt werden. Die genannte Optik ist zweckmäßigerweise ebenfalls beständig für im Dampfpfad oder im Strömungsbereich einer Dampfturbine herrschende Umgebungen ausgebildet.

In einer Ausgestaltung umfasst die Temperaturmesseinrichtung eine Umlenk- oder Reflexionsoptik. Durch diese Ausgestaltung kann die zu detektierende Wärmestrahlung in vorteilhafter Weise um eine Ecke oder um einen Winkel herum geleitet und/oder detektiert werden. Die Umlenk- oder Reflexionsoptik kann aus dem gleichen Material oder den gleichen Materialien gebildet sein wie die oben genannte Optik. Auch kann die Linsen- und/oder Sammeloptik die Umlenk- oder Reflexionsoptik umfassen.

In einer Ausgestaltung ist die Optik zumindest teilweise als Umlenk- oder Reflexionsoptik ausgebildet.

In einer Ausgestaltung weist die Umlenk- oder Reflexionsoptik ein Umlenkelement auf.

In einer Ausgestaltung ist die Umlenk- oder Reflexionsoptik und/oder das Umlenkelement metallfrei ausgebildet. Durch diese Ausgestaltung kann mit Vorteil eine Eigenstrahlung des Metalls und damit eine Verfälschung der Temperaturmessung verhindert werden.

Das genannte Umlenkelement ist vorzugsweise ein Glasprisma oder umfasst ein solches.

In einer Ausgestaltung ist die Temperaturmesseinrichtung ausgebildet oder ausgelegt, die Temperatur der Komponente an einem Messpunkt zu messen, der einen Durchmesser von weniger als 20 mm hat. Diese Ausgestaltung ist insbesondere für die Temperaturmessung von Dampfturbinenkomponenten im entsprechenden Strömungsbereich zweckmäßig. Insbesondere kann nämlich zwischen Turbinenstufen oder -läufern nur wenig Platz für die Messung der Temperatur von rotierenden Teilen, zur Verfügung stehen.

In einer Ausgestaltung weist die Temperaturmesseinrichtung ein Fenster, beispielsweise zum Schutz der Messsonde vor äußeren Einflüssen auf, insbesondere, um die Messsonde gegen heißen Wasserdampf im Strömungsbereich der Dampfturbine oder Strömungsmaschine abzudichten. Alternativ kann das Fenster die Messsonde oder einen Teil der Messsonde bilden. Das Fenster kann weiterhin ein Sondenfenster oder ein Strahlungseintrittsfenster sein.

In einer Ausgestaltung ist das Fenster aus Saphir, beispielsweise monokristallinem Saphir oder Quarzglas gebildet oder umfasst ein solches Material. Diese Ausgestaltung ist insbesondere zweckmäßig, da andere konventionelle (Infrarot-)-Fenster, im Gegensatz zu Saphir, hygroskopisch sind und beispielsweise entsprechend durch den Wasserdampf in einer Dampfturbine degradieren können. Aufgrund der optischen Eigenschaften des Saphirs, kann eine Detektion von Wärmestrahlung gemäß dieser Ausgestaltung im Wellenlängenbereich des mittleren Infrarots (MIR) eingeschränkt sein.

In einer Ausgestaltung ist die Komponente eine Welle oder ein Wellenteil einer Dampfturbine oder eine Dampfturbinenkomponente, wobei die Komponente relativ zu einem die Komponente umgebenden Gehäuse der Dampfturbine rotierbar ist.

In einer Ausgestaltung weist die Temperaturmesseinrichtung ein Thermoelement zur Messung einer Referenztemperatur der Komponente auf. Diese Ausgestaltung ist insbesondere für eine genaue und reproduzierbare Temperaturmessung zweckmäßig.

In einer Ausgestaltung umfasst der Strahlungsleiter einen Wellenleiter oder bildet diesen.

In einer Ausgestaltung umfasst der Strahlungsleiter ein Faserbündel von Wellenleitern.

In einer Ausgestaltung umfasst die Temperaturmesseinrichtung eine Auswerteeinheit, welche angeordnet und ausgebildet ist, die von dem Strahlungsdetektor detektierte Wärmestrahlung auszuwerten und/oder einen entsprechenden Temperaturmesswert zu berechnen und/oder zu korrigieren. Insbesondere kann die Auswerteeinheit einen gemessenen Temperaturwert mit einem mit dem oben genannten Thermoelement gemessenen Referenz-Temperaturwert vergleichen. Weiterhin kann über die Auswerteeinheit ein gemessener Temperaturwert hinsichtlich eines Emissionsgrades der Komponente korrigiert oder angepasst werden.

Ein weiterer Aspekt der vorliegenden Erfindung betrifft die Verwendung der Temperaturmesseinrichtung zur, insbesondere berührungslosen, Messung der Temperatur einer rotierbaren Komponente der Strömungsmaschine, beispielsweise der Dampfturbine. Zweckmäßigerweise wird die Temperaturmesseinrichtung zur Messung der Temperatur der Komponente während eines Betriebs der Strömungsmaschine verwendet.

Der Ausdruck "Betrieb" kann vorliegend einen Normallast- oder Normalbetrieb, einen Teillastbetrieb, einen Anfahrvorgang, einen Abfahrvorgang, als auch einen (vorübergehenden) Stillstand der Strömungsmaschine bezeichnen. Mit dem vorübergehenden Stillstand ist vorzugsweise eine Rücknahme oder Abkopplung der Strömungsmaschine vom Stromnetz gemeint.

Ein weiterer Aspekt der vorliegenden Erfindung betrifft ein Verfahren zum Betrieb einer Strömungsmaschine oder einen Teil eines solchen Verfahrens. Das Verfahren umfasst das berührungslose Messen und/oder Überwachen der Temperatur mindestens einer rotierbaren Komponente der Strömungsmaschine mit einer Temperaturmesseinrichtung, wie oben beschrieben. Das Verfahren umfasst weiterhin das Anfahren der Strömungsmaschine gemäß einem durch die gemessene Temperatur bestimmten oder definierten Temperaturgradienten.

Der Temperaturgradient kann insbesondere durch Materialparameter, beispielsweise die thermische Belastbarkeit der Komponente einschränkende, zulässige und/oder zweckmäßige Parameter mitbestimmt sein. Insbesondere kann der Temperaturgradient durch eine maximal zulässige, von der Temperatur der Komponente abhängige Anfahrgeschwindigkeit der Strömungsmaschine festgelegt sein. Der Temperaturgradient bezeichnet weiterhin vorzugsweise die zeitliche Änderung der entsprechenden Temperatur.

Durch das Anfahren wird die Strömungsmaschine zweckmäßigerweise auf eine Normalbetriebs- oder Nennlasttemperatur erwärmt oder gebracht. Der Temperaturgradient oder das Aufheizen der Strömungsmaschine bspw. während des Anfahrens ist insbesondere problematisch, da sich bewegliche oder rotierende Komponenten, beispielsweise die Welle, stärker und/oder schneller erwärmen als das Gehäuse. Dadurch dehnen sich die genannten Komponenten ebenfalls stärker beziehungsweise schneller aus als das Gehäuse, wodurch hohe und stark belastende thermo-mechanische Spannungen entstehen können.

Das "Anfahren" kann sich vorliegend beispielsweise auch auf einen Teillastbetrieb beziehen.

Das Verfahren kann zusätzlich zu den genannten Verfahrensschritten an beliebiger Stelle weitere für ein Betriebsverfahren einer Strömungsmaschine zweckmäßige oder erforderliche Verfahrensschritte umfassen. Bei den zusätzlichen Verfahrensschritten kann es sich um Verfahrensschritte des Standes der Technik handeln.

In einer Ausgestaltung umfasst das Verfahren das Beheizen, beispielsweise das elektrische Beheizen, der Strömungsmaschine auf eine Heiztemperatur während eines Stillstands und/oder während eines Abfahrvorgangs der Strömungsmaschine. Vorzugsweise umfasst das Verfahren in dieser Hinsicht das Beheizen des Gehäuses der Strömungsmaschine. Unter "Beheizen" wird insbesondere auch ein Erwärmen und/oder ein "Halten" der Strömungsmaschine auf der Heiztemperatur verstanden. Zu diesem Zweck kann insbesondere eine Beheizungseinrichtung vorgesehen sein. Die Heiztemperatur bezeichnet vorzugsweise eine Solltemperatur und eine Temperatur unterhalb einer Normalbetriebstemperatur der Strömungsmaschine. Alternativ kann das Beheizen während eines Anfahrvorgangs der Strömungsmaschine durchgeführt werden.

In einer Ausgestaltung beträgt oder liegt die Heiztemperatur zwischen 250 °C und 450 °C.

In einer Ausgestaltung wird das berührungslose Messen der Temperatur während eines Normalbetriebs und/oder während eines Abfahrvorgangs der Strömungsmaschine durchgeführt. Alternativ kann das berührungslose Messen der Temperatur während eines Stillstands und/oder während eines Anfahrvorgangs der Strömungsmaschine durchgeführt werden.

In einer Ausgestaltung wird das berührungslose Messen der Temperatur über einen bestimmten Zeitraum hinweg oder wiederholt durchgeführt. Durch diese Ausgestaltung kann die Temperatur der Komponente vorteilhafterweise über den Zeitraum hinweg überwacht werden.

In einer Ausgestaltung wird das berührungslose Messen der Temperatur in vorbestimmten Intervallen durchgeführt. Durch diese Ausgestaltung kann ein "Temperaturdrift" oder eine Detektion dieses "drifts" durch den Strahlungsdetektor mit Vorteil verhindert werden.

In einer Ausgestaltung wird das berührungslose Messen der Temperatur an mindestens zwei verschiedenen Positionen oder Stellen der Strömungsmaschine und/oder der Komponente durchgeführt. Vorzugsweise wird das berührungslose Messen diesbezüglich in einem Einströmbereich und in einem Niederdruckbereich der Komponente und/oder der Strömungsmaschine durchgeführt.

Merkmale die sich vorliegend auf die Temperaturmesseinrichtung beziehen, können sich insbesondere auch auf die Verwendung oder das beschriebene Verfahren beziehen und umgekehrt.

Weitere Einzelheiten der Erfindung werden nachfolgend anhand der Zeichnungen beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben.
- Figur 1: zeigt eine schematische Schnittansicht eines Teils einer Strömungsmaschine und eine Temperaturmesseinrichtung gemäß einer ersten Ausführungsform.
- Figur 2: zeigt einen Teil einer Temperaturmesseinrichtung gemäß der ersten Ausführungsform anhand einer vereinfachten Zeichnung.
- Figur 3: zeigt eine schematische Schnittansicht eines Teils einer Strömungsmaschine und eine Temperaturmesseinrichtung gemäß einer weiteren Ausführungsform.
- Figur 4: zeigt einen Teil einer Temperaturmesseinrichtung gemäß der Ausführungsform aus Figur 3 anhand einer vereinfachten Zeichnung.
- Figur 5: zeigt eine schematische und vereinfachte Schnittansicht eines Teils einer Strömungsmaschine.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, wie zum Beispiel Schichten, Bauteile und Bereiche zur besseren Darstellbarkeit und/oder zum besseren Verständnis übertrieben dick oder groß dimensioniert dargestellt sein.

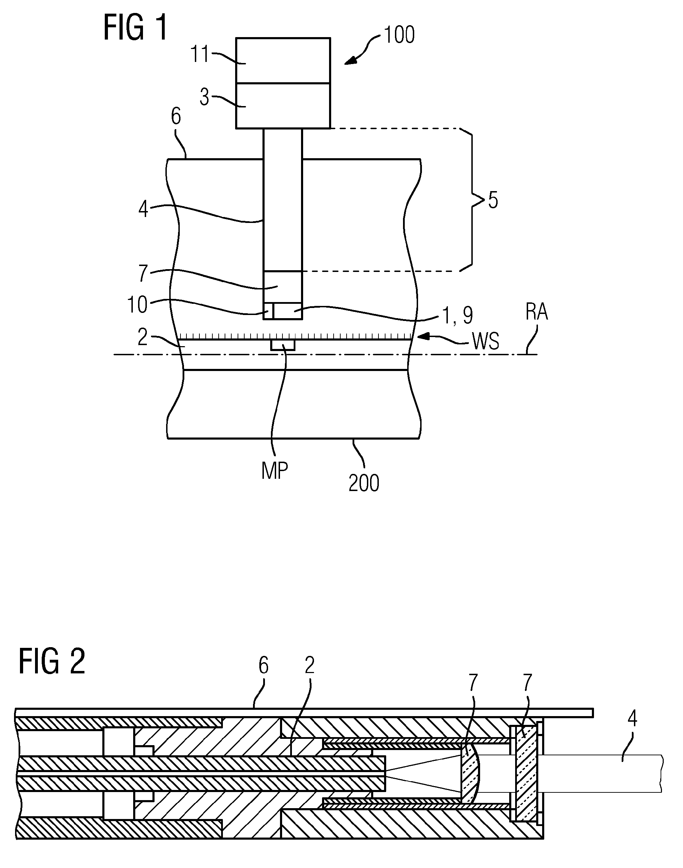

Figur 1 zeigt eine schematische Schnittansicht eines Teils einer Strömungsmaschine 200. Weiterhin ist in Figur 1 schematisch eine Temperaturmesseinrichtung 100 dargestellt. Die Temperaturmesseinrichtung 100 ist vorzugsweise zur berührungslosen, beispielsweise pyrometrischen, Temperaturmessung insbesondere von Turbinenkomponenten ausgebildet.

Die Strömungsmaschine 200 ist vorzugsweise eine Dampfturbine alternativ kann die Strömungsmaschine eine Gasturbine sein.

Die Temperaturmesseinrichtung 100 umfasst eine Messsonde 1. Die Messsonde 1 ist vorzugsweise zur berührungslosen Temperaturmessung einer rotierbaren Komponente 2, beispielsweise einer Welle, eines Wellenteils oder eines Läufers einer Dampfturbine, eingerichtet. Die Komponente 2 ist vorzugsweise relativ zu einem Gehäuse 6 der Strömungsmaschine 200 und/oder relativ zu der Temperaturmesseinrichtung 100 rotierbar. Eine entsprechende Rotationsachse ist in Figur 1 mit RS bezeichnet. Die Temperaturmesseinrichtung 100 umfasst weiterhin einen Strahlungsdetektor 3 zur Detektion einer von der Komponente ausgehenden oder emittierten Wärmestrahlung (in den Figuren 1 und 2 mit "WS"). Der Strahlungsdetektor 3 ist - von der Messsonde 1 beabstandet - außerhalb des Gehäuses 6 angeordnet. Der Strahlungsdetektor 3 ist vorzugsweise ein InGaAS-Detektor und/oder ein Infrarotdetektor für den Wellenlängenbereich des nahen Infrarots (NIR).

Die Temperaturmesseinrichtung 100 umfasst weiterhin einen Strahlungsleiter 4. Der Strahlungsleiter 4 ist vorzugsweise ein Wellenleiter oder umfasst einen Wellenleiter. Ebenfalls kann der Strahlungsleiter 4 ein ganzes Faserbündel von Wellenleitern umfassen oder bilden. Der Strahlungsleiter 4 kann ein Lichtwellenleiter sein. Der Strahlungsleiter 4 hat vorzugsweise einen Durchmesser zwischen 0,1 mm und 3 mm.

Die Messsonde 1 kann durch die Spitze des Strahlungsleiters 4 oder ein Fenster (siehe unten) gebildet werden.

Für eine zweckmäßige Temperaturmessung von beweglichen Dampfturbinenteilen sind die Messsonde 1 und der Strahlungsleiter 4 vorzugsweise temperaturbeständig, beispielsweise bis zu Temperaturen von 600 °C, und druckbeständig, beispielsweise bis zu Drücken von 200 bar, ausgebildet.

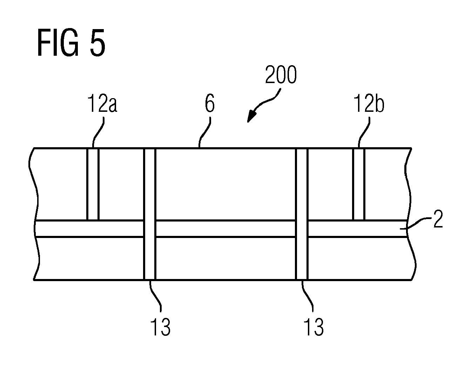

Der Strahlungsleiter 4 ist angeordnet und ausgebildet, die Wärmestrahlung WS von der Messsonde 1 zum Strahlungsdetektor 3 zu leiten. Der Strahlungsleiter 4 weist weiterhin einen länglichen oder lanzenartigen Abschnitt 5 auf. Zur Messung der Temperatur der rotierbaren Komponente 2 ist die Messsonde 1 zweckmäßigerweise nah an der Komponente 2 und innerhalb des Gehäuses 6 der Strömungsmaschine 200 angeordnet. Dementsprechend weist die Strömungsmaschine vorzugsweise mindestens eine Öffnung (vgl. Bezugszeichen 12a und 12b in Verbindung mit Figur 5) auf, durch die die Messsonde 1 in das Gehäuse 6 eingebracht werden kann.

Weiterhin sind der lanzenartige Abschnitt 5 und/oder der Strahlungsleiter 4 für die Temperaturmessung größtenteils innerhalb des genannten Gehäuses 6 angeordnet. Mit anderen Worten wird über den lanzenartigen Abschnitt 5 des Strahlungsleiters 4 die Wärmestrahlung mit Vorteil aus dem Gehäuse 6 herausgeführt. Auf diese Weise kann der Strahlungsdetektor 3 vorteilhafterweise außerhalb des Gehäuses bleiben und die Messsonde 1 möglichst nah an einen Messpunkt MP herangeführt werden, um eine möglichst genaue Messung der Temperatur zu ermöglichen. Der Strahlungsdetektor 3 muss insbesondere nicht beständig für Temperatur- und Druckbedingungen ausgebildet sein, die in einem Strömungsbereich einer Dampfturbine vorherrschen. Mithin muss der Strahlungsdetektor 3 keine so kleinen Abmessungen haben, um beispielsweise durch Öffnungen im Gehäuse 6 der Strömungsmaschine 200 nah an die rotierende Komponente 2 herangeführt werden zu können.

Die Temperaturmesseinrichtung 100 weist weiterhin ein Fenster 9. Das Fenster ist vorzugsweise ein Strahlungseintrittsfenster für die Wärmestrahlung WS. Das Fenster 9 ist weiterhin vorzugsweise aus Quarzglas oder Saphir (Al₂O₃) gebildet, beispielsweise monokristallinem Saphir, zum Schutz der Messsonde 1. Das Fenster 9 kann vorgesehen sein, um - im Fall einer Dampfturbine als Strömungsmaschine - die Messsonde 1 vor dem durch die vorherrschenden Temperatur- und Druckverhältnisse reaktiven Wasserdampf im Strömungsbereich zu schützen. Das Fenster 9 kann alternativ die Messsonde 1 oder einen Teil davon bilden.

Der oben genannte Messpunkt MP hat vorzugsweise einen Durchmesser oder eine Abmessung von weniger als 20 mm. Der Messpunkt MP liegt, anders als in den Figuren dargestellt, vorzugsweise neben mindestens einem oder zwischen zwei Läufer(n) der entsprechenden Turbine oder Strömungsmaschine, so dass für die Temperaturmessung nur wenig Platz auf der Komponente 2 zur Verfügung stehen kann. Da die Komponente 2 sich vorzugsweise bewegt oder rotiert und die Temperaturerfassung oder -messung mit einer Verzögerung oder Trägheit behaftet sein kann, wird über den Messpunkt MP in der Realität eine Art Mittelwert der Temperatur der Komponente 2 über einen umfänglichen Bereich von der Breite des Messpunktes MP gemessen.

Die Temperaturmesseinrichtung 100 oder die Messsonde 1 weist vorzugsweise eine Optik 7 auf. Die Messsonde kann auch durch die Optik gebildet werden. Die Optik 7 ist vorzugsweise eine Linsen- und oder Sammeloptik, um die von der Komponente emittierte Wärmestrahlung WS zu sammeln, zu fokussieren oder in den Strahlungsleiter 4 einzukoppeln. Die Optik 7 ist vorzugsweise aus hochtemperaturbeständigem Glas, beispielsweise Quarzglas, oder Saphir bzw. Aluminiumoxid, wie monokristallinem Saphir oder umfasst eines dieser Materialien. Vorzugsweise ist die Optik 7 metallfrei oder frei von Metallbeschichtungen, um eine Eigenstrahlung der Metallkomponenten und eine damit verbundene Verfälschung der Temperaturmessung zu verhindern.

Die Temperaturmesseinrichtung 100 weist weiterhin eine Auswerteeinheit 11 auf. Die Auswerteeinheit 11 ist vorzugsweise ausgebildet, die von dem Strahlungsdetektor 3 detektierte Wärmestrahlung WS auszuwerten oder einen entsprechenden Messwert zu berechnen, zu korrigieren oder zu verarbeiten.

Die Temperaturmesseinrichtung 100 weist weiterhin an oder in der Nähe der Messsonde 1 ein Thermoelement 10 auf. Das Thermoelement 10 ist insbesondere für die Messung einer Referenztemperatur für die beschriebene Temperaturmesseinrichtung 100 vorgesehen.

In der oben beschriebenen Auswerteeinheit 11 kann die mit dem Thermoelement gemessene Referenztemperatur erfasst und/oder mit dem eigentlichen Temperaturmesswert der Temperaturmesseinrichtung verglichen werden.

Mit der beschriebenen Temperaturmesseinrichtung 100 wird es insbesondere ermöglicht, beispielsweise während des Betriebs der Strömungsmaschine 200, die Temperatur von rotierenden Teilen der Welle, Lager- oder Achsteilen (Komponente 2) zu messen. Insbesondere kann die Temperatur der genannten Teile direkt und unabhängig von der Temperatur des Gehäuses 6 erfasst werden. Dadurch kann weiterhin beispielsweise eine Anfahrtszeit der Dampfturbine verkürzt werden. Insbesondere im Zusammenhang mit einer Begleit- oder Stillstandsheizung (nicht explizit gekennzeichnet) kann so die Effizienz und/oder Flexibilität des Einsatzes der Turbine verbessert werden, ohne die Materialien, insbesondere diejenigen der rotierenden Komponente(n) übergebührlich oder stärker als vorgesehen, zu beanspruchen.

Eine Dampfturbine beispielsweise während des Stillstands auf möglichst hoher Temperatur zu halten, ermöglicht es, die Maschine bspw. für den Normalbetrieb nur noch wenig oder über kleine Temperaturdifferenzen oder Temperaturgradienten hinweg erwärmen zu müssen, um die gewünschte Normalbetriebs- oder Nennlasttemperatur zu erreichen. Diese (kleinen) Temperaturgradienten können - mit der Kenntnis der exakten Temperatur der Komponente(n) mit Vorteil schneller erreicht werden.

Mit der Anfahrtzeit ist vorzugsweise die Zeit gemeint, die benötigt wird, um die Turbine materialschonend oder optimal auf eine Normalbetriebstemperatur hochzufahren. Unter einem Normalbetrieb oder Nennlastbetrieb ist weiterhin vorzugsweise der bezweckte Betrieb der Turbine während der Stromerzeugung gemeint. Es kann damit auch ein Teillastbetrieb gemeint sein.

Figur 2 zeigt einen Teil einer Temperaturmesseinrichtung gemäß der in Figur 1 beschriebenen Ausführungsform. Es ist insbesondere zu erkennen, dass die Optik 7 zwei einzelne Linsen umfasst, welche für die Bündelung oder Einkopplung der Wärmestrahlung WS (in Figur 2 nicht explizit gekennzeichnet) vorgesehen sind.

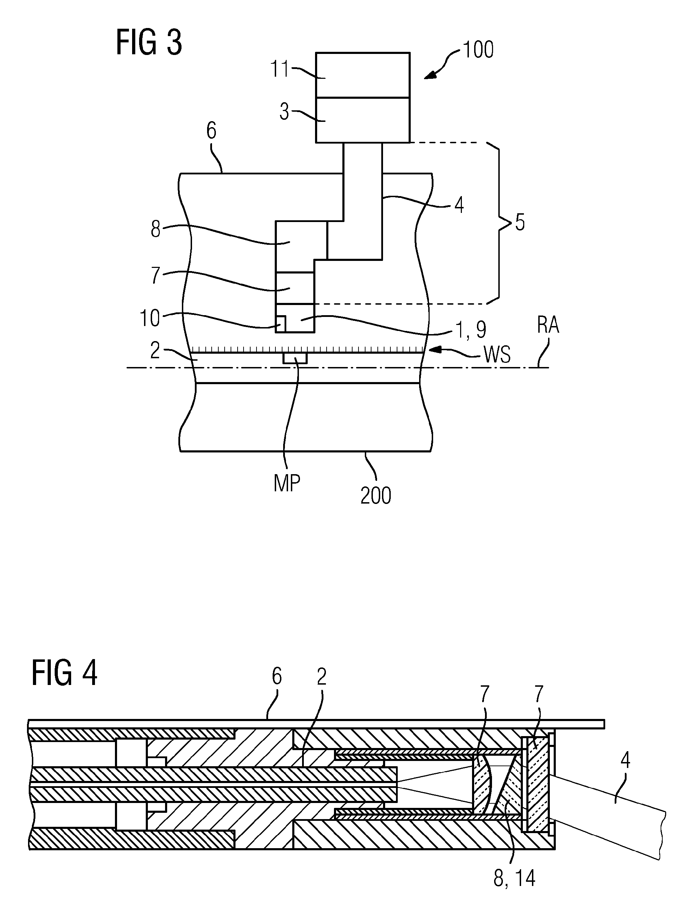

Figur 3 zeigt anhand einer schematischen Schnittansicht der Strömungsmaschine eine alternative Ausführungsform der Temperaturmesseinrichtung 100. Im Gegensatz zur Darstellung aus Figur 1, umfasst der Strahlungsleiter 4 in Figur 3 zwei Knicke, und die Wärmestrahlung WS muss entlang dieser Richtungsänderungen geführt werden. Dazu ist eine Umlenk- oder Reflexionsoptik 8 vorgesehen, welche vorzugsweise im Strahlungsleiter 4 angeordnet ist. Obwohl nur eine Umlenk- oder Reflexionsoptik 8 gekennzeichnet ist, können mehrere Umlenk- oder Reflexionsoptiken vorgesehen sein. Alternativ kann auch die oben beschriebene Optik 7 die Umlenk- oder Reflexionsoptik(en) 8 aufweisen. Durch die beschriebene Ausführungsform kann vorteilhafterweise eine Führung der Wärmestrahlung und damit eine genaue Messung der Temperatur der Komponente 2 erreicht werden, auch wenn die Komponente 2 oder ein entsprechender Messpunkt MP von außerhalb des Gehäuses 6 nur schwer oder nicht auf direktem Weg zugänglich ist.

Figur 4 zeigt einen Teil einer Temperaturmesseinrichtung gemäß der in Figur 3 beschriebenen Ausführungsform. Es ist insbesondere zu erkennen, dass die Optik 7 die Umlenk- oder Reflexionsoptik 8 umfasst, mit welcher die Wärmestrahlung WS um eine Ecke herumgeführt werden kann. Insbesondere ist ein Umlenkelement oder Glasprisma 14 gezeigt, welches als Umlenk- oder Reflexionselement fungiert. Mithilfe des Umlenkelements 14 kann die Wärmestrahlung mit Vorteil um einen Winkel (nicht explizit gekennzeichnet) abgelenkt werden. Da, wie oben im Zusammenhang mit dem Fenster 9 bereits angedeutet, ein metallhaltiges Reflexionsmittel Eigenstrahlung emittieren und damit die Temperaturmessung verfälschen könnte, handelt es sich bei dem Prisma vorzugsweise um ein Glasprisma.

Die vorliegende Erfindung betrifft weiterhin ein Verfahren zum Betrieb einer Strömungsmaschine 200, wie beispielsweise einer Dampfturbine umfassend das berührungslose Messen der Temperatur mindestens einer rotierbaren Komponente der Strömungsmaschine (wie oben beschrieben) mit der beschriebenen Temperaturmesseinrichtung 100. Das Verfahren umfasst weiterhin das Anfahren bzw. Hochfahren der Strömungsmaschine 200 auf einen Teillastbetrieb oder einen Nenn- oder Normallastbetrieb gemäß einem durch die gemessene Temperatur bestimmten Temperaturgradienten. Die genaue Messung der genannten Temperatur erlaubt also zunächst die Festlegung des Temperaturgradienten, der für den Anfahrvorgang noch überwunden werden muss. Dabei ist der Temperaturgradient vorzugsweise durch die Differenz von Normalbetriebs- oder Nennlasttemperatur und der von der Temperaturmesseinrichtung 100 gemessenen Temperatur bestimmt. Durch die Messung kann weiterhin der Anfahrvorgang, bei dem die Strömungsmaschine 200 bekanntlich erwärmt wird, zeiteffizienter durchgeführt werden.

Ein schnelleres Anfahren der Strömungsmaschine 200 bedeutet gemeinhin eine höhere Materialbelastung, eine Verkürzung der Lebensdauer und/oder eine Verringerung der durchschnittlichen, noch schadenfrei möglichen standardmäßigen Anfahrvorgänge. Es kann also beispielsweise beim Anfahren die Zeit gespart werden, welche ohne die exakte Kenntnis der Temperatur der inneren, rotierenden oder festigkeitsrelevanten Komponenten zur Sicherheit für das Anfahren noch berücksichtigt werden muss, um das Material thermisch oder thermo-mechanisch nicht über Gebühr zu belasten.

Ein Kaltstart einer Dampfturbine bzw. ein Anfahrvorgang einer vollständig, beispielsweise auf Umgebungstemperatur, abgekühlten Maschine auf einen Normallastbetrieb kann beispielsweise 6 Stunden dauern.

Hingegen dauert ein ordnungsgemäßer oder zulässiger Anfahrvorgang ausgehend von einer Temperatur sämtlicher Komponenten von 300 °C beispielsweise lediglich eine Stunde und, ausgehend von einer entsprechenden Temperatur von 400 °C beispielsweise lediglich 20 Minuten.

Das Verfahren umfasst weiterhin das Beheizen der Strömungsmaschine auf eine Heiztemperatur während eines Stillstands und/oder während eines Abfahrvorgangs der Strömungsmaschine, wenn die Strömungsmaschine also beispielsweise vom Netz genommen wird.

Zu diesem Zweck kann eine Beheizungseinrichtung vorgesehen sein, mit welcher vorzugsweise das Gehäuse 6 der Strömungsmaschine beheizt wird. Es handelt sich dabei beispielsweise um eine externe, elektrische Begleit- oder Stillstandsheizung, mit der beispielsweise ein Turbinengehäuse auch für längere Zeiträume über 400 °C gehalten oder beheizt werden kann. Das Gehäuse 6 kann dafür äußerlich gut isoliert und/oder abgeschirmt werden, sodass ein Abkühlen der restlichen oder innerer Bauteile oder Komponenten über das Gehäuse nicht oder nicht signifikant erfolgt. Stattdessen werden vorzugsweise alle Teile der Turbine auf der Soll- oder Heiztemperatur gehalten.

Die Dampfturbine wird vorzugsweise beheizt, um insbesondere bei einem erneuten Anfahrvorgang Zeit zu sparen, bzw. die Dampfturbine schnell wieder ans Stromnetz anschließen zu können.

Vorzugsweise beträgt die Heiztemperatur zwischen 250 °C und 400 °C. Alternativ kann die Heiztemperatur niedriger oder noch höher als der genannte Bereich sein.

Weiterhin wird das berührungslose Messen der Temperatur vorzugsweise während eines Normalbetriebs und/oder während eines Abfahrvorgangs der Strömungsmaschine durchgeführt. Beim Messen der Temperatur während des Normalbetriebs, d.h. im Nennlastbetrieb, kann unter Umständen vorteilhafterweise ein Materialverschleiß rotierender Komponenten durch eine besonders starke Erwärmung nachgewiesen werden. Eine Messung der Temperatur der Komponente(n) während eines Abfahrvorgangs der Strömungsmaschine ist insbesondere zweckmäßig, um das Abkühlverhalten einzelner beweglicher Komponenten zu messen oder zu überwachen, da Unregelmäßigkeiten im Abkühlverhalten der beweglichen Komponenten oder häufiges Abkühlen die entsprechenden Werkstoffe oder Materialien besonders stark schädigen oder ermüden kann, wodurch auch der weitere oder folgende Betrieb der Strömungsmaschine beeinträchtigt werden kann.

Das berührungslose Messen der Temperatur wird vorzugsweise über einen bestimmten Zeitraum hinweg oder wiederholt durchgeführt. Das kontinuierliche oder wiederholte Messen der Temperatur ist insbesondere für die Temperaturüberwachung einzelner rotierender Teile der Dampfturbine zweckmäßig. Vorzugsweise wird ein einzelner Messwert jedoch nicht über einen langen Zeitraum, sondern vorzugsweise in einem unterbrochenen oder "chop"-Modus erfasst, um einen "Detektordrift" oder einen "drift" in der gemessenen Temperatur zu korrigieren.

Das berührungslose Messen der Temperatur wird vorzugsweise weiterhin an mindestens zwei verschiedenen Positionen, beispielsweise in einem Einströmbereich und in einem Niederdruckbereich der Komponente oder der Strömungsmaschine beziehungsweise der Dampfturbine durchgeführt. Das berührungslose Messen kann beispielsweise an einer Vielzahl von Messstellen entlang der Welle einer Dampfturbine während des Betriebs durchgeführt werden.

Figur 5 zeigt eine schematische Schnittansicht zumindest eines Teils einer Strömungsmaschine 200. Ähnlich wie in den Figuren 1 und 3 dargestellt, umfasst die Strömungsmaschine eine rotierende Komponente 2, vorzugsweise eine Welle, ein Wellenteil, einen Ventilsitz, ein Lagerteil oder ein anderes rotierendes Teil der Strömungsmaschine. Entlang einer Längsachse der Welle voneinander beabstandet, sind 2 Turbinenläufer 13 angedeutet. Jeweils links und rechts der Turbinenläufer 13 umfasst die Strömungsmaschine 200 oder das Gehäuse 6 Gehäuseöffnungen 12a und 12b.

Die Gehäuseöffnung 12a (linke Seite) ist vorzugsweise an einem Einströmbereich angeordnet, beispielsweise in einem Bereich, in dem - im Falle einer Dampfturbine - heißer Dampf einströmt und auf die Turbinenläufer trifft. Die Gehäuseöffnung 12b (rechte Seite) ist vorzugsweise an einem Niederdruckbereich der Maschine angeordnet.

Vorzugsweise kann die beschriebene Temperaturmesseinrichtung über beide der genannten Gehäuseöffnungen 12a, 12b in das Gehäuse 6 der Strömungsmaschine 200 eingebracht und entsprechend die Temperatur der Komponente 2 gemessen werden. Dadurch kann beispielsweise eine Temperaturmessung von mehreren rotierenden Teilen unabhängig voneinander erfolgen und ein entsprechendes Anfahren der Turbine oder Strömungsmaschine noch besser angepasst werden, nämlich beispielsweise an die kälteste der gemessenen Temperaturen. Dadurch kann weiterhin ein zulässiger Temperaturgradient jedenfalls eingehalten und einer Materialschädigung der Strömungsmaschine vorgebeugt werden.

Die Erfindung ist nicht durch die Beschreibung anhand der Ausführungsbeispiele auf diese beschränkt, sondern umfasst jedes neue Merkmal sowie jede Kombination von Merkmalen.

## Patentansprüche

1. Temperaturmesseinrichtung (100) für eine Strömungsmaschine (200) umfassend:
- eine Messsonde (1) zur berührungslosen Temperaturmessung einer beweglichen, insbesondere rotierbaren Komponente (2),
- einen von der Messsonde (1) beabstandeten Strahlungsdetektor (3) zur Detektion einer von der Komponente (2) ausgehenden Wärmestrahlung (WS) und
- einen Strahlungsleiter (4), welcher angeordnet und ausgebildet ist, die Wärmestrahlung (WS) von der Messsonde (1) zum Strahlungsdetektor (3) zu leiten.

2. Temperaturmesseinrichtung (100) nach Anspruch 1, wobei die Messsonde (1) und der Strahlungsleiter (4) bis 600 °C temperaturbeständig und/oder bis 200 bar druckbeständig ausgebildet sind.

3. Temperaturmesseinrichtung (100) nach Anspruch 1 oder 2, wobei der Strahlungsleiter (4) mindestens einen lanzenartigen Abschnitt (5) aufweist und wobei die Temperaturmesseinrichtung (100) derart ausgebildet ist, dass die Messsonde (1) zur Temperaturmessung innerhalb eines die Komponente umgebenden Gehäuses (6), beispielsweise der Strömungsmaschine (200), angeordnet und die Wärmestrahlung (WS) über den mindestens einen lanzenartigen Abschnitt (5) aus dem Gehäuse (6) herausgeführt werden kann.

4. Temperaturmesseinrichtung (100) nach einem der vorhergehenden Ansprüche, wobei die Messsonde (1) eine Optik (7) umfasst.

5. Temperaturmesseinrichtung (100) nach Anspruch 4, wobei die Optik (7) zumindest teilweise als Umlenk- oder Reflexionsoptik (8) ausgebildet ist und ein Umlenkelement (14) aufweist, welches metallfrei ist.

6. Temperaturmesseinrichtung (100) nach einem der vorhergehenden Ansprüche, welche ausgebildet ist, die Temperatur der Komponente (2) an einem Messpunkt (MP) zu messen, der einen Durchmesser von weniger als 20 mm hat.

7. Temperaturmesseinrichtung (100) nach einem der vorhergehenden Ansprüche, welche ein Fenster (9) aus Saphir aufweist.

8. Temperaturmesseinrichtung (100) nach einem der vorhergehenden Ansprüche, wobei die Komponente (2) eine Welle oder ein Wellenteil einer Dampfturbine ist und wobei die Komponente (2) relativ zu einem die Komponente (2) umgebenden Gehäuse (6) der Dampfturbine rotierbar ist.

9. Verwendung der Temperaturmesseinrichtung (100) nach einem der vorhergehenden Ansprüche zur Messung der Temperatur einer rotierbaren Komponente (2) einer Strömungsmaschine (200), beispielsweise einer Dampfturbine.

10. Verfahren zum Betrieb einer Strömungsmaschine (200) umfassend das
- berührungslose Messen der Temperatur mindestens einer rotierbaren Komponente (2) der Strömungsmaschine (200) mit einer Temperaturmesseinrichtung (100) und das
- Anfahren der Strömungsmaschine (200) gemäß einem durch die gemessene Temperatur bestimmten Temperaturgradienten.

11. Verfahren nach Anspruch 10, umfassend das Beheizen der Strömungsmaschine (200) auf eine Heiztemperatur während eines Stillstands und/oder während eines Abfahrvorgangs der Strömungsmaschine (200).

12. Verfahren nach Anspruch 11, wobei die Heiztemperatur zwischen 250 °C und 450 °C liegt.

13. Verfahren nach einem der Ansprüche 10 bis 12, wobei das berührungslose Messen der Temperatur während eines Normalbetriebs und/oder während eines Abfahrvorgangs der Strömungsmaschine (200) durchgeführt wird.

14. Verfahren nach einem der Ansprüche 10 bis 13, wobei das berührungslose Messen der Temperatur über einen bestimmten Zeitraum hinweg und/oder wiederholt durchgeführt wird.

15. Verfahren nach einem der Ansprüche 10 bis 14, wobei das berührungslose Messen der Temperatur an mindestens zwei verschiedenen Positionen (12a, 12b), beispielsweise in einem Einströmbereich und in einem Niederdruckbereich der Strömungsmaschine (200), durchgeführt wird.
